# EUROPÄISCHE PATENTSCHRIFT

(11) **EP 1 857 322 B1**
(45) Veröffentlichungstag und Bekanntmachung des Hinweises auf die Patenterteilung: **30.12.2009**
(21) Anmeldenummer: 07108470.1
(22) Anmeldetag: 18.05.2007
(51) Int. Cl.: B60P 7/15, B62D 33/04

(54) **Einstecklatte für ein Transportfahrzeug, Aufbau für die Ladefläche eines Transportfahrzeugs und Transportfahrzeug**
Insertable slat for a transport vehicle, superstructure for the loading area of a transport vehicle and transport vehicle
Latte d'introduction pour un véhicule de transport, création pour la surface de charge d'un véhicule de transport et véhicule de transport

(30) Priorität: 18.05.2006 DE 102006023753
(43) Veröffentlichungstag der Anmeldung: 21.11.2007
(73) Patentinhaber: Spanset Inter AG, 8618 Oetwil am See (CH)
(72) Erfinder: Franz, Carl, 42111 Wuppertal (DE)
(74) Vertreter: Cohausz & Florack

(56) Entgegenhaltungen:
- DE-A1- 10 238 785
- DE-U1- 9 103 401
- DE-U1- 29 801 555
- NL-C2- 1 004 416

## Beschreibung

Die Erfindung betrifft eine Einstecklatte für Transportfahrzeuge gemäß dem Oberbegriff des Anspruchs 1.

Darüber hinaus betrifft die Erfindung einen Aufbau für die Ladefläche eines Transportfahrzeugs, insbesondere eines Lastkraftwagens oder eines Aufliegers bzw. Anhängers für einen Lastkraftwagen, das mit beabstandet zueinander angeordneten, auf der Ladefläche aufgestellten Rungen und zwischen den Rungen angeordneten Einstecklatten ausgestattet ist, die mit endseitigen Kopfstücken jeweils in eine an den Rungen ausgebildete Aufnahme eingesteckt sind.

Schließlich betrifft die Erfindung auch ein mit einem solchen Aufbau ausgestattetes Transportfahrzeug.

Aufbauten der voranstehend angegebenen Art bilden bei Lastfahrzeugen üblicherweise das Traggerüst für eine Plane, von der das jeweils zu transportierende Gut abgedeckt und vor Witterungseinflüssen geschützt wird. Gleichzeitig stellt ein solcher Aufbau einen wesentlichen Bestandteil der zur Ladungssicherung vorgesehenen Vorrichtungen eines Transportfahrzeuges dar. Dabei kommt den Einstecklatten im Hinblick auf eine Sicherung der Last quer zur Fahrtrichtung eine besondere Bedeutung zu.

Aufbauten für Transportfahrzeuge, insbesondere für Straßenfahrzeuge, wie Lastkraftwagen, Sattelanhänger, Anhänger etc., werden danach unterschieden, ob sie dauerhaft fest aufgebaut sind (Festaufbauten) oder aus Einzelteilen zusammengesetzt zur wiederholten Montage und Demontage vorgesehen sind. Während bei Festaufbauten vor allem die Seitenwände die Funktion der Ladungssicherung in Querrichtung miterfüllen, wenn die Ladung für eine formschlüssige Ladungssicherung geeignet ist, sind dafür bei wiederholt montier- und demontierbaren Aufbauten, die üblicherweise aus Traggerüst und darüber gespannter Plane bestehen, jeweils Einzelteile vorhanden.

Bei wiederholt montier- und demontierbaren Aufbauten sind zu diesem Zweck von jeher zwischen die vertikal von der Ladefläche aufragenden Rungen so genannte "Einstecklatten" auf unterschiedlichen Höhen positionierbar. Die Rungen weisen dazu üblicherweise in regelmäßigen Höhenabständen angeordnete Aufnahmen auf, in die die Einstecklatten mit ihren Endabschnitten eingesteckt werden können.

Die betreffenden Aufnahmen sind in der Praxis üblicherweise als Einstecktaschen ausgebildet. Bei Aufbauten, bei denen neben dem Stirnwandeckpfosten und dem Rückwandeckpfosten üblicherweise bei Sattelanhängern mit maximal zulässiger Ladeflächenlänge drei Mittelrungen längs der seitlichen Begrenzung der Ladefläche positioniert sind, weisen solche nach Art von Einstecktaschen ausgebildete, im Querschnitt üblicherweise U-förmig und nach oben geöffnete Aufnahmen typischerweise eine Breite von 26 bis 27 mm, eine Höhe von 100 - 150 mm und eine Tiefe zwischen 25 - 60 mm auf.

Nach der Montage sind die Einstecklatten mit ihren Enden formschlüssig in der jeweils zugeordneten Aufnahme gehalten. Die wesentliche Sicherungsaufgabe der Einstecklatten besteht dabei primär darin, die Abdeckplane auf Position zu halten und leichte Ladegüter mit geringer Eigenmasse über Formschluss zu sichern.

Wichtig für eine optimale Erfüllung dieser Funktion ist, dass nur ein geringes seitliches Spiel zwischen den abstützenden Einstecklatten und den Außenwänden der Ladung vorhanden ist, damit die Ladung nach einem allenfalls nur kurzen seitlichen Bewegungsweg an den den Laderaum seitlich begrenzenden Einstecklatten anschlagen. Die Einstecklatten müssen dann in der Lage sein, die auf sie treffende bzw. an ihnen anliegende Last sicher aufzunehmen. Insbesondere dürfen sich die Einstecklatten in Folge der quer zur Fahrtrichtung wirkenden Belastungen nicht so stark verbiegen, dass sie aus den Aufnahmen der Rungen herausfallen oder gar brechen. Auch muss die nach außen gebogene Einstecklatte während der Ladungsbelastung die Ladung wieder annähernd auf ihre alte Stellplatzposition auf der Ladefläche zurückdrücken können.

In der Praxis kann es jedoch dazu kommen, dass schwere Ladungen nach einer Querbeschleunigung zur Fahrzeuglängsseite die Ladung so stark gegen die Einstecklatten und die Plane gedrückt wird, dass nach dem Wegfall der Beschleunigungskraft die Latten und die Plane keine ausreichende Rückstellkraft besitzen, um die Ladung wieder in ihre Ursprungsstellposition zurückzudrücken. In diesem Zustand hat das Fahrzeug eine unzulässige Überbreite. Bei einer erneuten Querbeschleunigung in die entgegen gesetzte Richtung erreicht daraufhin das Ladegut aufgrund des jetzt zur Verfügung stehenden großen Seitenspiels zu den gegenüberliegenden Einstecklatten eine große Geschwindigkeit und damit einhergehend eine hohe kinetische Energie, welche dann auf die Einstecklatten und Plane der gegenüberliegenden Seite trifft und diese zusätzlich belastet. Diese höheren dynamischen Belastungen sind aus Sicherheitsgründen nicht zulässig.

Praktische Erfahrungen zeigen, dass heute verwendete Einstecklatten in der weitaus überwiegenden Zahl der Fälle nur in der Lage sind, sehr leichte Ladegüter sowie die Seitenplane über seitlichen Formschluss mit der erforderlichen Sicherheit bei Querkraftbelastung auf der Fahrzeugfläche zu halten.

Dies erweist sich insbesondere bei solchen Fahrzeugaufbauten als problematisch, die eine einfache Beladung über die Längsseiten der Transportfläche in Form eines Formschlusses ermöglichen sollen. Solche Aufbauten umfassen üblicherweise eine Schiebeplane, die zur Beladung längs der Transportfläche zusammengeschoben werden kann. Dabei wird in der Regel auf klappbare Seitenbordwände verzichtet, um einen schnellen und unkomplizierten Zugang zur Ladefläche bei minimiertem Fahrzeugeigengewicht zu ermöglichen. Derart ausgestattete Transportfahrzeuge werden in der Fachsprache auch als "Curtainsider" bezeichnet. Bei diesem Fahrzeugtyp wird die seitliche Begrenzung des Laderaums annähernd vollständig allein durch die Einstecklatten und die Seitenplane bewerkstelligt. Im Regelfall ist bei diesen Fahrzeugaufbauten eine zusätzliche Ladungssicherung erforderlich.

95 % aller Seiten-Einstecklatten am europäischen Markt haben eine durchgehende Seitenlatten-Dicke von ca. 25 mm und zwar unabhängig von dem Material, aus dem sie hergestellt sind. Am gebräuchlichsten sind die Materialien Holz und Aluminium.

Es sind jedoch auch vereinzelt Seiteneinstecklatten aus Metall mit einer Querschnittsdicke von > 25 - 40 mm im Gebrauch. Diese Latten weisen in der Regel gegenüber dünneren Einstecklatten eine verbesserte Festigkeit bei Querbelastung auf. Um sie in konventionell ausgebildeten, an die marktüblichen Abmaße angepassten Aufbauten einsetzen zu können, sind an diese Seiteneinstecklatten endseitig Kopfstücke angeschweißt. Diese Kopfstücke dienen als Adapterstücke, über die die über dem üblichen Maß liegende Dicke der Einstecklatte an das übliche Maß der lichten Weite der Aufnahme angepasst wird.

Alternativ können die Endabschnitte der Einstecklatten selbst in ihrer Dicke so reduziert sein, dass sie in die üblichen Aufnahmen passen. So ist es beispielsweise bei mehr als 25 mm dicken Holzeinstecklatten üblich, die Endabschnitte auf eine Dicke von etwa 25 mm zurückzuschneiden.

In der voranstehend beschriebenen Weise verstärkt ausgebildete Einstecklatten gewähren zwar eine höhere Sicherheit bei Querbelastung. Dem steht allerdings der Nachteil gegenüber, dass für Aufbauten mit unterschiedlichen Rungenabständen jeweils Einstecklatten mit einer exakt an den jeweiligen Abstand angepassten Länge zur Verfügung gestellt werden müssen. Auch lassen sich Montage- und Fertigungsungenauigkeiten mit solchen Latten nur bedingt ausgleichen, da es bei diesen Einstecklatten beispielsweise nicht ohne Weiteres möglich ist, eine zunächst mit einer Überlänge angelieferte Latte auf den jeweils vorhandenen Rungenabstand zu kürzen. Daher ist die Verwendung von verstärkten Einstecklatten der bekannten Art insbesondere bei einer späteren Nachrüstung heutzutage mit einem vergleichbar großen Kosten- und Lageraufwand verbunden.

Neben dem voranstehend beschriebenen, sich auf die Sicherung des zu transportierenden Guts längs der Längsseiten der jeweiligen Transportgüter beziehenden Standes der Technik ist aus der gattungsbildenden DE 298 01 555 U1 ein Ladebalken bekannt, der sowohl längs als auch quer zur Längserstreckung der Transportfläche des jeweiligen Fahrzeugs zwischen zwei Rungen positioniert werden kann. Der Ladebalken lässt sich dazu mit seinen beiden Enden in Aufnahmen einlegen, die an den Rungen oder an den längs ausgerichteten Ladebalken ausgebildet sind. In diesen Aufnahmen wird der jeweilige Ladebalken dann formschlüssig gehalten.

Um die Länge des bekannten Ladebalkens an die jeweilige Breite der Ladefläche anpassen zu können, ist der Ladebalken teleskopierbar ausgeführt. Dazu kann ein endseitig an dem Ladebalken angeordnetes Kopfstück in einen zentralen Lattenabschnitt des Ladebalkens eingeschoben werden. Die Position des Kopfstücks kann dabei stufenweise festgestellt werden. Mit ausreichendem Abstand über der Transportfläche befestigt dienen die bekannten Ladebalken dazu, eine weitere Ladeebene in einem Laderaum eines Transportfahrzeugs zu bilden. Allerdings weisen auch die bekannten Ladebalken eine nur unzureichende Formstabilität gegen aus seitlicher Richtung auf sie wirkende Kräfte auf.

Die Aufgabe der Erfindung bestand daher darin, eine Einstecklatte zu entwickeln, welche zum einen so stabil ist, dass sie mit ausreichender Sicherheit die seitliche Abstützung einer Ladung auch bei hohen Querkräften durch Formschluss übernehmen kann, und die zum anderen auf einfache Weise an unterschiedliche Abmaße der Rungen eines Aufbaus für eine Ladefläche eines Transportfahrzeugs angepasst werden kann. Darüber hinaus sollten ein Aufbau für ein Transportfahrzeug und ein mit einem solchen Aufbau ausgestattetes Transportfahrzeug angegeben werden, bei denen eine ausreichende Ladungssicherung auch bei Auftreten hoher quer zur Fahrtrichtung gerichteter Kräfte gewährleistet ist.

Diese Aufgabe ist erfindungsgemäß durch eine gemäß Anspruch 1 ausgebildete Einstecklatte für Transportfahrzeuge gelöst worden.

Bei einer erfindungsgemäßen Einstecklatte ist mindestens ein separates Kopfstück vorhanden, das mit ihrem Lattenabschnitt form- bzw. kraftschlüssig verbunden ist. Die Aufteilung der Einstecklatte in zwei separat handhabbare Teile (Kopfstück/Lattenabschnitt) eröffnet verschiedene Möglichkeiten der Anpassung der Einstecklatte an die sich in der Praxis jeweils stellenden Anforderungen. So dient das Kopfstück einerseits, wie beim Stand der Technik auch, als Adapter, über den sich der überdicke Lattenabschnitt in die übliche Abmaße aufweisenden Aufnahmen einstecken lässt. Zum anderen kann jedoch auch die wirksame Länge der Einstecklatte ohne Weiteres an die in der Praxis jeweils gegebenen Abstände der Rungen angepasst werden. So kann eine Längenanpassung beispielsweise dadurch erfolgen, dass das Kopfstück vor seiner endgültigen Befestigung am Lattenabschnitt in dessen Längsrichtung verschoben wird, bis die erforderliche Länge erreicht ist. Reicht die jeweils mögliche Verschiebung des Kopfstücks für diesen Zweck nicht aus, so kann der Anwender auch den Lattenabschnitt selbst auf die jeweils optimale Länge kürzen, indem er den überschüssigen Längenabschnitt von ihm abtrennt.

Die Erfindung stellt somit eine Einstecklatte zur Verfügung, die einerseits problemlos so ausgelegt werden kann, dass sie die im praktischen Einsatz auftretenden Kräfte stets sicher aufnehmen kann. Zum anderen lässt sich die erfindungsgemäße Einstecklatte auf einfache Weise an die in der Praxis jeweils gegebene Geometrie des Aufbaus anpassen, bei dem sie eingesetzt werden soll.

Dementsprechend ist die oben angegebene Aufgabe in Bezug auf einen Aufbau für die Ladefläche eines Transportfahrzeugs, insbesondere eines Lastkraftwagens oder eines Aufliegers bzw. Anhängers für einen Lastkraftwagen, erfindungsgemäß dadurch gelöst worden, dass dieser entsprechend Anspruch 20 ausgebildet ist.

Die durch die Erfindung geschaffene Möglichkeit einer einfachen Anpassung an die Geometrie des jeweiligen Aufbaus bzw. der einzelnen Bauelemente eines solchen Aufbaus macht die erfindungsgemäße Einstecklatte besonders vielseitig einsetzbar. So lässt sich eine erfindungsgemäße Einstecklatte nicht nur im üblichen Sinne zur seitlichen Abstützung des jeweils zu transportierenden Guts nutzen, sondern beispielsweise auch als Sperrbalken, durch den sich der Laderaum, der vom mit der jeweiligen Latte ausgestatteten Aufbau umgeben wird, in mindestens zwei Abteilungen unterteilen lässt.

Ein erfindungsgemäßes Transportfahrzeug ist in entsprechender Weise zur Lösung der oben angegebenen Aufgabe erfindungsgemäß durch die Merkmale des Anspruchs 19 gekennzeichnet.

Die Vielseitigkeit einer erfindungsgemäßen Einstecklatte lässt sich dadurch weiter verbessern, dass beide Kopfstücke der Einstecklatte als separates, in Längsrichtung des Lattenabschnitts an diesem ausrichtbares und an dem Lattenabschnitt form- und/oder kraftschlüssig befestigbares Bauelement ausgebildet sind.

Wird bei einer erfindungsgemäßen Einstecklatte mindestens der Lattenabschnitt als Hohlprofil ausgebildet, so kann die Einstecklatte bei einem geringen Gewicht gleichzeitig eine besonders hohe Festigkeit aufweisen. Derart ausgebildete Einstecklatten lassen sich insbesondere aus einem Leichtmetallwerkstoff, wie Aluminium, oder Verbundwerkstoffen herstellen. Eine für diese Zwecke besonders geeignete Ausgestaltung der Erfindung ist **dadurch gekennzeichnet, dass** der Lattenabschnitt zwei parallel in Längsrichtung des Lattenabschnitts verlaufende und beabstandet zueinander ausgerichtete Kastenabschnitte aufweist, die über einen Wandabschnitt miteinander verbunden sind. Die Kastenabschnitte stellen dabei eine besonders hohe Biegesteifigkeit bei Querbelastung sicher. Gleichzeitig können die Kastenabschnitte mit ihren einander zugeordneten Seitenflächen jeweils eine Führung für das Kopfstück bilden. Weiter vervollständigt werden kann die Führung des Kopfteils an dem Lattenabschnitt dadurch, dass der Wandabschnitt eine seitliche Führung des Kopfstücks bildet. Dazu kann der Wandabschnitt zweckmäßigerweise bündig zu jeweils einer der Seitenflächen der Kastenabschnitte angeordnet werden. Um auch an der zum Wandabschnitt gegenüberliegenden Kante der Kastenabschnitte eine seitliche Führung des Kopfstücks zu ermöglichen, kann dort jeweils ein Absatz angeformt sein.

Der Vorteil eines formschlüssigen Halts des Kopfstücks an dem Lattenabschnitt besteht darin, dass es auf diese Weise einfach möglich ist, den jeweils an dem Lattenabschnitt anliegenden Abschnitt des Kopfstücks und den Lattenabschnitt so weit zu überlappen, dass auch im Bereich der Verbindung von Kopfstück und Lattenabschnitt immer eine ausreichende Biegefestigkeit der Einstecklatte gewährleistet ist.

Alternativ oder ergänzend kann jedoch auch eine kraftschlüssige Verbindung von Kopfstück und Lattenabschnitt zweckmäßig sein, um beispielsweise einen verliersicheren, spielfreien Halt des Kopfstücks am Lattenabschnitt zu gewährleisten, oder aber, um die eingeleitetet Druckkraft eines Sperrbalkens in die Rungentasche weiterzuleiten. Dazu kann ein Befestigungsmittel zum kraftschlüssigen Befestigen des Kopfstücks an dem Lattenabschnitt vorgesehen sein, bei dem es sich beispielsweise um eine Schraubverbindung handeln kann. Dieses Befestigungsmittel wird dabei beispielsweise durch Kombination mit einer geeigneten formschlüssigen Verbindung bevorzugt so ausgerichtet, dass es in der Praxis nur Längsschubkräfte übertragen muss, also selbst weitestgehend frei von Kräften ist, die quer zu seiner Wirkrichtung wirken.

Im Hinblick auf ein geringes Gewicht kann es darüber hinaus zweckmäßig sein, ebenfalls das Kopfstück als Hohlprofil auszubilden. Sofern eine kraftschlüssige Verbindung von Lattenabschnitt und Kopfstück durch ein Befestigungsmittel erfolgen soll, kann dazu das Kopfstück im Wirkbereich des Befestigungsmittels verstärkt sein. Um dabei eine einfache und sichere Montage auch unter den in der Praxis gegebenen rauen Bedingungen zu gewährleisten, ist es günstig, wenn die Verstärkung in jedem Bereich des Kopfstücks vorgesehen ist, an der das Befestigungsmittel ansetzbar ist. Auf diese Weise können Verwechslungen bei der Lage und Ausrichtung des Befestigungsmittels in Bezug auf die jeweilige Lage des Kopfstücks vermieden werden. Aus demselben Grund kann es günstig sein, das Kopfstück zumindest in Bezug auf seine Längserstreckung symmetrisch auszubilden. Dabei lassen sich bei minimalem Materialeinsatz geringste Spannungen und damit eine maximale Belastbarkeit des Kopfstücks erreichen, wenn es über seine nach seiner Montage im erfindungsgemäßen Aufbau vertikal ausgerichteten Achse vom Materialeinsatz so ausgebildet ist, dass ein annähernd gleiches Widerstandsmoment in beide Richtungen um die betreffende Achse gesichert ist. Eine besonders hohe Biegesteifigkeit auch des Kopfstücks lässt sich dabei dadurch erreichen, dass das Kopfstück im Wirkbereich des Befestigungsmittels einen Versteifungssteg aufweist. Durch eine Erhöhung der Wandungsdicke des Kopfstückes im Schraubenbereich können entsprechend hohe Druckkräfte von der Einstecklatte in das Kopfstück übertragen werden.

Die Versteifungsstege der Kopfstücke gewährleisten auch eine gewisse Robustheit beim Handling, insbesondere beim Anfahren gegen die Einstecklattenköpfe von Flurförderfahrzeugen auf dem Be- und Entladeplatz. Daher ist es gegebenenfalls zweckmäßig, mehrere Versteifungsstege vorzusehen, die in geeigneten Abständen zueinander angeordnet sind.

Eine weitere für die Praxis günstige Ausgestaltung der Erfindung besteht darin, dass bei einer erfindungsgemäßen Einstecklatte in an sich bekannter Weise in den Wandabschnitt mindestens eine Öffnung zum Einführen eines Halteelements eingeformt ist. Sofern mehrere Öffnungen in den Wandabschnitt eingeformt sind, können diese Öffnungen in regelmäßigen Abständen angeordnet sein, um die Einstecklatte beispielsweise als Teil eines rasterartig aufgebauten Befestigungssystems verwenden zu können.

Abhängig von der jeweiligen Verwendung einer erfindungsgemäßen Einstecklatte kann es darüber hinaus vorteilhaft sein, wenn der Übergang von der der jeweiligen Last zugeordneten Seite des Wandabschnitts zur Unterseite und / oder zur Oberseite der Einstecklatte stark abgerundet und / oder abgeflacht ausgebildet ist. Diese Ausgestaltung ist beispielsweise dann besonders zweckmäßig, wenn die Einstecklatte nach dem Beladen der Ladefläche in engen Kontakt mit dem geladenen Gut stehen soll. In diesem Fall erlauben es die abgeflachten bzw. abgerundeten Übergänge dann, wenn die Einstecklatte nach dem Beladen zum seitlichen Verschließen des Laderaums in die jeweiligen Rungen gesteckt werden, die Einstecklatten einerseits unter einem gewissen Druck gegen die Last zu drücken und andererseits relativ zu ihr zu bewegen, ohne dass es zu einer Blockierung der Einsteck-Bewegung bzw. zu einer Beschädigung der mit der Latte in Kontakt kommenden Flächen der Ladung kommt. Genauso kann die Einstecklatte beispielsweise mit ihrem abgeschrägten Übergangsbereich gegen den Fahrzeugaußenrahmen des Fahrzeugs abgestützt werden, an dem sie benutzt wird. Dies kann beispielsweise dann sinnvoll sein, wenn die Latte unmittelbar an die Ladefläche angrenzend montiert wird, um die an der Seitenlatte angegurtete Ladung auch in deren Fußbereich in ihrer Kraftrichtung seitlich zur Fahrzeugmitte hin abzustützen.

Nachfolgend wird die Erfindung anhand einer ein Ausführungsbeispiel darstellenden Zeichnung näher erläutert. Es zeigen jeweils schematisch:
- Fig. 1: einen Ausschnitt eines Aufbaus für die Ladefläche eines Transportfahrzeugs in seitlicher Ansicht;
- Fig. 2: den Ausschnitt A von Fig. 1 in vergrößerter Ansicht;
- Fig. 3: den Ausschnitt A von Fig. 1 in einem Schnitt entlang der in Fig. 2 eingezeichneten Schnittlinie X-X;
- Fig. 4: den Ausschnitt A von Fig. 1 in einer Ansicht von oben;
- Fig. 5: eine alternativ gestaltete Einstecklatte in einer seitlichen Ansicht;
- Fig. 6: die Einstecklatte gemäß Fig. 5 in einer Ansicht von oben;
- Fig. 7: die Einstecklatte gemäß Fig. 5 in einem Schnitt entlang der in Fig. 6 eingezeichneten Schnittlinie Y-Y;
- Fig. 8: die Einstecklatte gemäß Fig. 5 in einem Schnitt entlang der in Fig. 5 eingezeichneten Schnittlinie Z-Z.

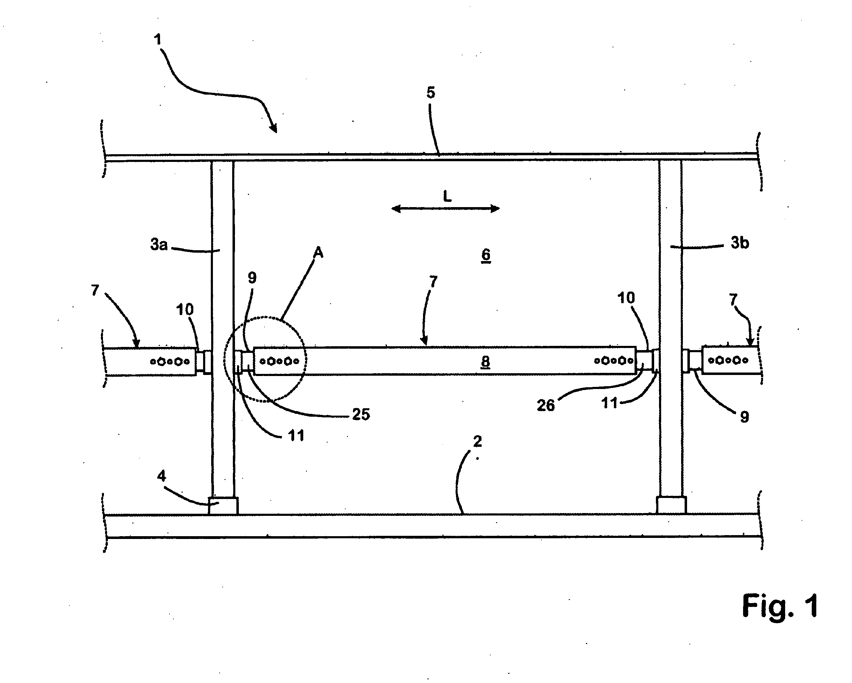

Der in Fig. 1 dargestellte Aufbau 1 ist auf der Ladefläche 2 eines Transportfahrzeugs errichtet, bei dem es sich beispielsweise um einen Lastkraftwagen mit einem entlang seiner Längsseite beladbaren "Curtainsider"-Auflieger handeln kann. Der Aufbau 1 umfasst dabei neben seinen in den hier nicht sichtbaren Eckbereichen der Ladefläche 2 angeordneten, hier ebenfalls nicht dargestellten Eckpfosten Rungen 3a,3b, die in regelmäßigen Abständen längs der Längsseiten der Ladefläche 2 angeordnet sind. Für ihre Befestigung sind entlang den Längsseiten der Ladefläche 2 Befestigungsschuhe 4 angeordnet, in denen die Rungen 3a,3b stehen.

Mit ihren oberen freien Enden tragen die Rungen 3a,3b ein Gestänge 5, welches auch als Dachbaum benannt wird. Das Gestänge 5 stützt eine hier nicht gezeigte Plane so ab, dass sie im geschlossenen Zustand den über der Ladefläche 2 gebildeten Laderaum 6 vollständig abdeckt.

Zur seitlichen Abstützung einer auf der Ladefläche 2 gestellten Last erstreckt sich zwischen den in Längsrichtung L der Ladefläche 2 zueinander benachbarten Rungen 3a,3b jeweils eine Einstecklatte 7. Jede der Einstecklatten 7 weist einen langen, den wesentlichen Teil des Abstands zwischen den Rungen 3a,3b überbrückenden Lattenabschnitt 8 auf, der an seinen zwei Enden jeweils ein Kopfstück 9,10 trägt. Die Kopfstücke 9,10 sind mit ihrem jeweils frei über den Lattenabschnitt 7 hinaus stehenden Endabschnitt 25,26 jeweils in eine taschenförmige, im Querschnitt U-förmige und nach oben offene Aufnahme 11 eingehängt.

Der Lattenabschnitt 8 ist z. B. als einstückig stranggepresstes Aluminiumprofil ausgebildet, das an seiner in Montagestellung oberen und unteren Längsseite jeweils einen im Querschnitt rechteckigen Kastenabschnitt 12,13 und einen die Kastenabschnitte 12,13 miteinander verbindenden Wandabschnitt 14 umfasst.

Die Außenseite des Wandabschnitts 14 ist bündig zu der in Montagestellung bezogen auf die Ladefläche 2 außen liegenden Seitenfläche der Kastenabschnitte 12,13 ausgerichtet. An ihren freien, einander gegenüberliegend angeordneten Kanten ist an die Kastenabschnitte 12,13 jeweils ein in Richtung des jeweils anderen Kastenabschnitts 12,13 weisender Absatz 15 angeformt. Dieser Absatz 15 bildet zusammen mit dem Wandabschnitt 14 und den einander zugeordneten Seitenflächen 16 der Kastenabschnitte 12,13 eine Führung, in die die Kopfstücke 9,10 eingeschoben und so formschlüssig gehalten sind, dass sie nur noch in Längsrichtung L der Einstecklatten 7 verschiebbar sind.

In den beiden Endbereichen des Lattenabschnitts 8 sind in den Wandabschnitt 14 in regelmäßigen Abständen Öffnungen 17 eingeformt.

Die Kopfstücke 9,10 sind z. B. ebenfalls aus stranggepressten Aluminium-Hohlprofilen gefertigt. Es weist eine im Querschnitt rechtwinklige Form auf. Dabei ist der Querschnitt durch in Längsrichtung L verlaufende Versteifungsstege 18,19 in drei symmetrisch zur Längsachse der Kopfstücke 9,10 angeordnete Kammern 20,21,22 geteilt.

Im Bereich der mittleren Kammer 21 sind die Seitenwände 23,24 der Kopfstücke 9,10 gegenüber der Wandstärke im Bereich der oberen und der unteren Kammer 20,22 verdickt ausgeführt. Auf diese Weise weist das jeweilige Kopfstück 9,10 im Bereich seiner mittleren Kammer 21 eine erhöhte Steifigkeit und ausreichend Material für die Ausbildung der Lochlaibung Lb auf, die für die dauerhaft sichere Befestigung des jeweiligen Kopfstücks 9,10 benötigt wird. Bei vier Hohlkammern sind die Wandungen der beiden äußeren Kammern entsprechend verdickt.

Die Dicke D der Kopfstücke 9,10 entspricht bis auf ein geringes Untermaß der lichten Weite W durchgehend der ihnen jeweils zugeordneten Aufnahme 11, so dass die Kopfstücke 9,10 mit ihren freien Endabschnitten 25,26 mit leichtem Spiel von oben in die Aufnahmen 11 eingesetzt werden können. Gleichzeitig entspricht der freie Abstand zwischen den Vorsprüngen 15 der Kastenabschnitte 12,13 und dem Wandabschnitt 14 des Lattenabschnitts 8 bis auf ein geringes Übermaß der Dicke D der Kopfstücke 9,10. Auf diese Weise können die Kopfstücke 9,10 mit leichtem Spiel in die durch den Wandabschnitt 14, die Vorsprünge 15 und die einander gegenüberliegenden Seiten 16 der Kastenabschnitte 12,13 gebildete Führung eingeschoben werden. Die Dicke DL des Lattenabschnitts 8 ist dabei um mindestens 20 %, insbesondere mindestens 25 %, größer als die Dicke D der Kopfstücke 9,10.

Die Lattenabschnitte 8 und die Kopfstücke 9,10 der Einstecklatten 7 werden vom Hersteller als separate Bauteile angeliefert. Für die Erstmontage wird dann die vom Lattenabschnitt 8 zu überspannende Länge abgeschätzt und der Lattenabschnitt 8 erforderlichenfalls auf diese Länge gekürzt. Anschließend werden die Kopfstücke 9,10 von der jeweiligen Stirnseite der Lattenabschnitte 8 in diese eingeschoben, bis die Position ihrer freien Enden bis auf ein geringes Untermaß dem Abstand der Rungen 3a,3b entspricht. Zur Festlegung der Position der Kopfstücke 9,10 in dem jeweiligen Lattenabschnitt 7 wird dann durch mindestens eine der Öffnungen 17 des Wandabschnitts 14 jeweils eine Bohrung durch das jeweilige Kopfstück 9,10 geführt. Die Lage der Öffnungen 17 ist dabei so gewählt, dass die auf diese Weise geschaffenen Durchgangsbohrungen 27 durch die mittlere, mit den verstärkten Seitenwänden versehene Kammer 21 des jeweiligen Kopfstücks 9,10 führen.

Durch die Durchgangsbohrungen 27 wird schließlich ausgehend von der dem Wandabschnitt 14 gegenüberliegenden Seite des jeweiligen Kopfabschnitts 9,10 als Befestigungsmittel ein Schraubenbolzen 28 gesteckt, dessen Kopf kegelstumpfförmig so abgeflacht ist, dass er nicht über die dem Wandabschnitt 14 gegenüberliegende Seite 29 der Kastenabschnitte 12,13 hinaussteht. Auf den Schraubenbolzen 28 wird ausgehend von der Außenseite A des Lattenabschnitts 7 eine Containermutter 30 geschraubt, deren Kopf ebenfalls kalottenförmig so abgeflacht ist, dass er nur um einen geringen Betrag über die Außenseite A des Lattenabschnitts 7 hinaus steht und ein Einhaken von Gegenständen verhindert ist. Die durch den Schraubenbolzen 28 und die Containermutter 30 gebildete kraftschlüssige Fixierung des jeweiligen Kopfstücks 9,10 ist dabei so ausgerichtet, dass Schraubenbolzen 28 und Containermutter 30 im Wesentlichen ausschließlich durch in ihrer Längsrichtung wirkende Kräfte belastet werden. Erforderlichenfalls wird beabstandet zu dem ersten Schraubenbolzen 28 ein entsprechendes Befestigungsmittel angeordnet, um das Kopfstück 9,10 bei zu erwartender Belastung in Längsrichtung L der Einstecklatten 7 zusätzlich zu sichern. Alternativ zu einer Befestigung mittels Schraubenbolzen können auch Nietverbindungen verwendet werden.

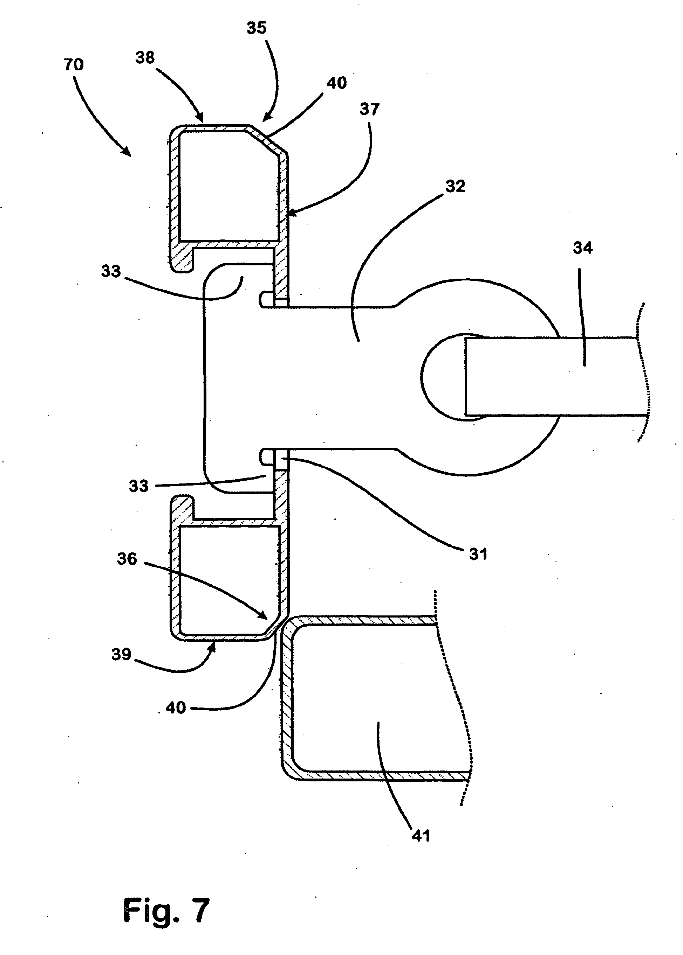

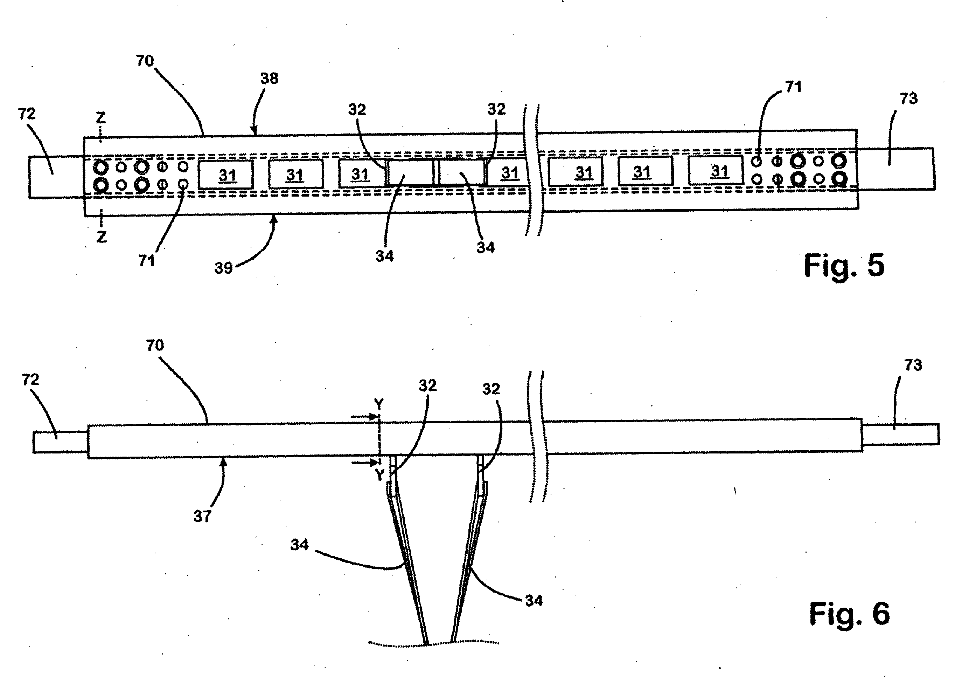

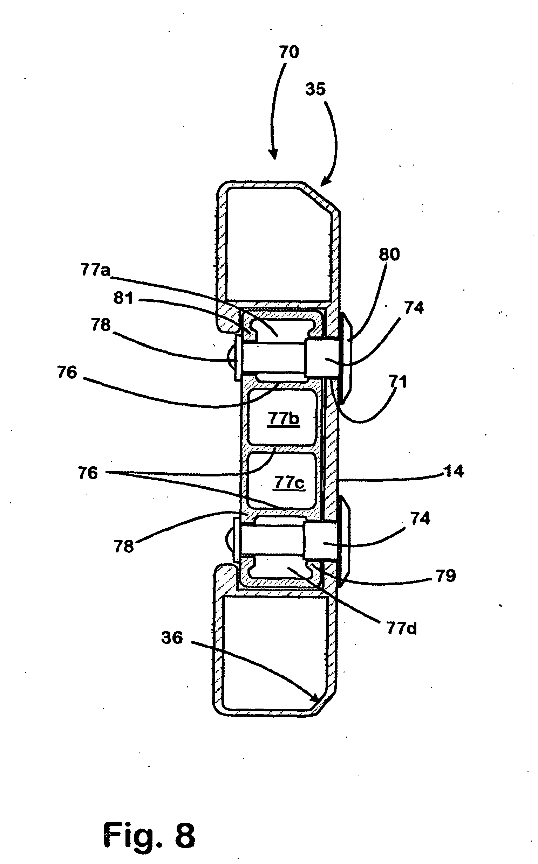

Wie in den Figuren 5 bis 8 dargestellt, können bei der in diesen Figuren dargestellten Einstecklatte 70 in den zugehörigen Wandabschnitt 14 jeweils fensterartige, rechtwinklig geformte Öffnungen 31 eingeschnitten, die in regelmäßigen Abständen zueinander und zu den zur Befestigung des jeweiligen Kopfstücks 9,10 dienenden Öffnungen 71 angeordnet sind. Die Öffnungen 31 können zum Einhaken von hakenartigen Verbindungselementen 32 dienen, deren Abmessungen so an die Form der Öffnungen 31 angepasst sind, dass sie einerseits frei in die jeweilige Öffnung 31 eingeführt und andererseits so ausgerichtet werden können, dass sie mit ihren Hakenvorsprüngen 33 den Wandabschnitt 14 hintergreifen (Fig. 7). Die Verbindungselemente 32 sind dabei beispielsweise fest mit jeweils einem Spanngurt 34 verbunden, mit dem die nicht dargestellte zu sichernde Last verzurrt ist.

Um das Risiko einer Beschädigung der zu sichernden Last bei einem Kontakt mit der Einstecklatte 70 zu minimieren, können, wie in Fig. 7 gezeigt, die Übergänge 35,36 zwischen der der Last zugeordneten Seite 37 des Wandabschnitts 14 und der Oberseite 38 bzw. Unterseite 39 der Einstecklatte abgeflacht ausgebildet sein. Weiter minimiert werden kann das Risiko einer Beschädigung dabei dadurch, dass die jeweils abgeflachten Abschnitte 40 des jeweiligen Übergangs 35,36 wiederum in einem großen Radius in die jeweilige Seite 37,38 bzw. 39 übergehen.

Die Abflachung 40 im Bereich des Übergangs 36 kann zudem genutzt werden, um die Einstecklatte 70 beispielsweise an einem Rahmenprofil 41 abzustützen, das die jeweilige Ladefläche 2 trägt (Fig. 7).

Die äußeren Abmessungen der Einstecklatte 70 und der endseitig in sie eingeschobenen Kopfstücke 72,73 entsprechen im Wesentlichen den Abmessungen der Einstecklatte 7 und ihren Kopfstücken 9,10.

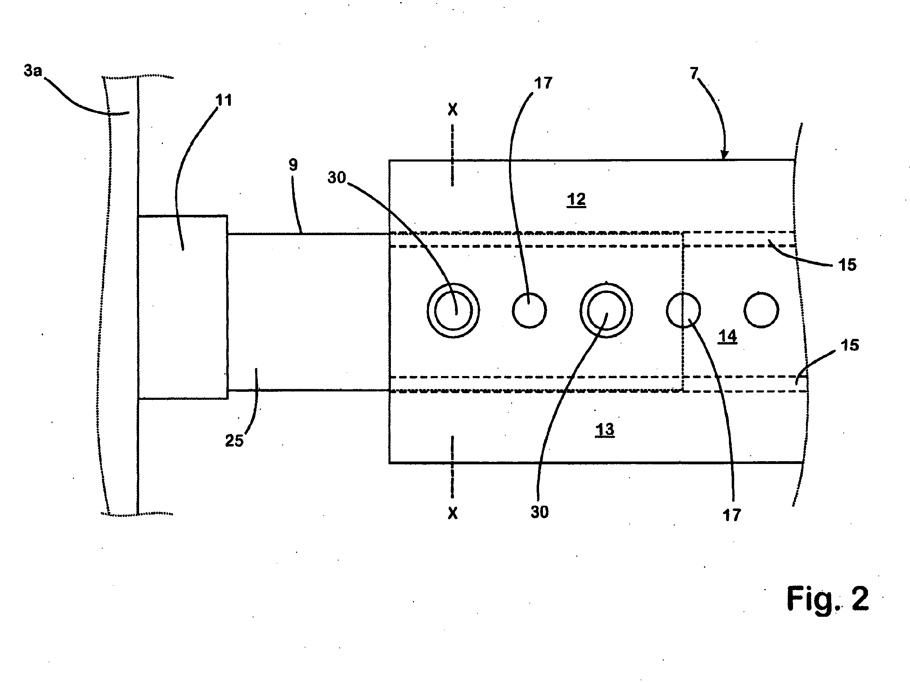

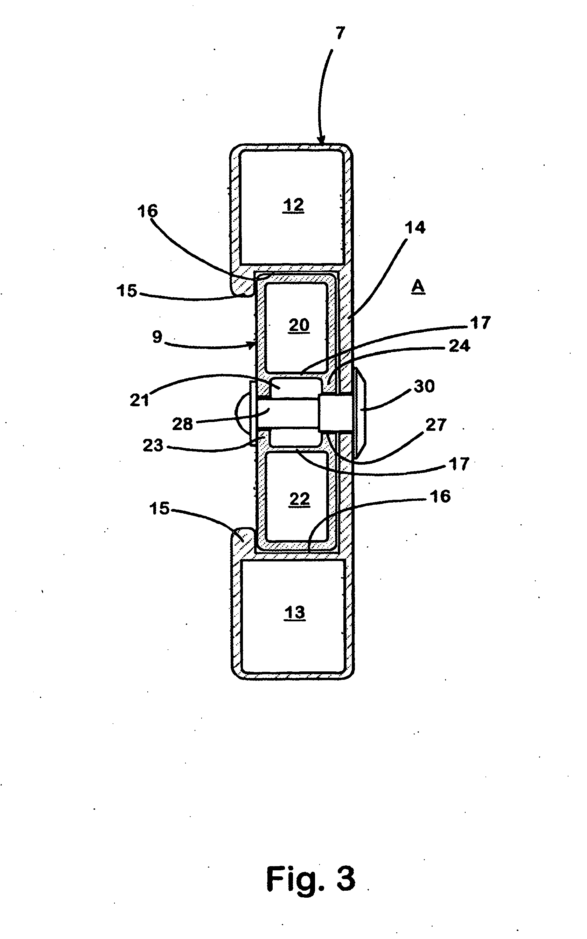

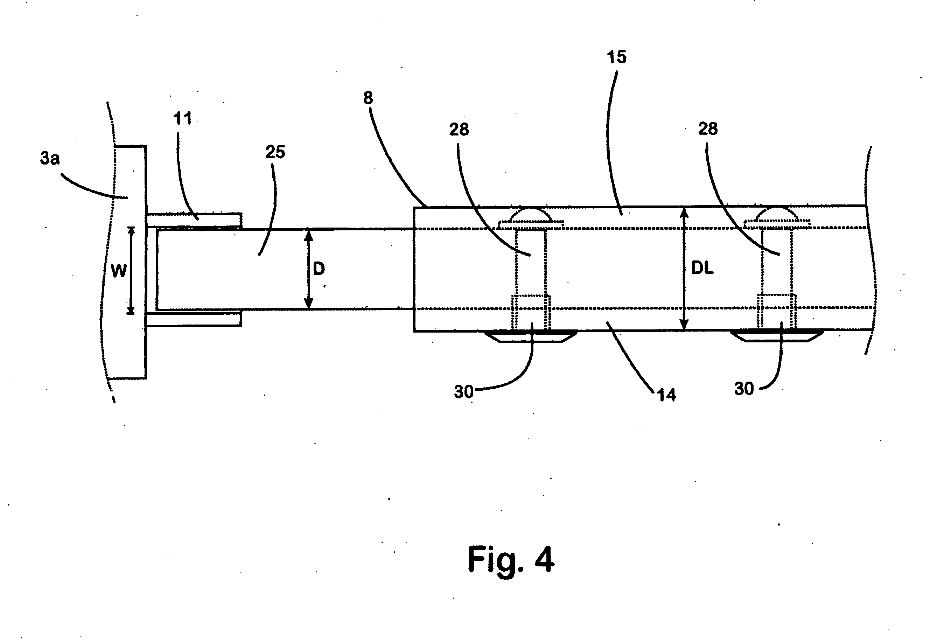

Als weiterer Unterschied zusätzlich zu ihren voranstehend beschriebenen abgeflachten Übergängen 35,36 sind bei der Einstecklatte 70 die Öffnungen 71, die für die zum Befestigen der Kopfstücke 72,73 vorgesehenen Befestigungselemente (Containerschrauben) 74 erforderlich sind, in zwei Reihen übereinander angeordnet. Pro Reihe kann dabei mindestens ein Befestigungselement 74 zum Befestigen in die Einstecklatte 70 eingeschraubt werden.
Auf diese Weise kann die Einstecklatte 70 im praktischen Einsatz noch höhere Kräfte aufnehmen als die in den Figuren 1 bis 4 gezeigte Einstecklatte 7. Dabei ist das Kraftaufnahmevermögen der Einstecklatte 70 zusätzlich dadurch gesteigert, dass die Kopfstücke 72,73 in vier durch jeweils einen Steg 76 voneinander getrennte Kammern 77a,77b,77c,77d unterteilt und die gegenüberliegenden Wandbereiche 78,79, an denen der Kopf 80 und das Mutterstück 81 der Befestigungselemente 74 jeweils abgestützt sind, verdickt ausgebildet sind.

### BEZUGSZEICHEN

- 1: Aufbau auf einer Ladefläche 2
- 2: Ladefläche
- 3a,3b: Rungen
- 4: Befestigungsschuhe
- 5: Gestänge
- 6: Laderaum
- 7,70: Einstecklatten
- 8: Lattenabschnitt
- 9,10,72,73: Kopfstücke
- 11: Aufnahme
- 12,13: Kastenabschnitt
- 14: Wandabschnitt
- 15: Absatz
- 16: einander gegenüber liegende Seitenflächen der Kastenabschnitte 12,13
- 17,71: Öffnungen
- 18,19: Stege
- 20,21,22: Kammern
- 23,24: verstärkte Seitenwände der Kopfstücke 9,10
- 25,26: Endabschnitte der Kopfstücke 9,10
- 27: Durchgangsbohrungen
- 28: Schraubenbolzen
- 29: dem Wandabschnitt 14 gegenüberliegende Seite 29 der Kastenabschnitte 12,13
- 30: Containermutter
- 31: Öffnungen
- 32: Verbindungselemente
- 33: Hakenvorsprünge der Verbindungselemente 32
- 34: Spanngurt
- 35,36: Übergänge zwischen der der Last zugeordneten Seite 37 des Wandabschnitts 14 und der Oberseite 38 bzw. Unterseite 39 der Einstecklatte 7
- 37: der Last zugeordnete Seite der Einstecklatte 7
- 38: Oberseite der Einstecklatte 7
- 39: Unterseite der Einstecklatte 7
- 40: abgeflachte Abschnitte der Übergänge 35,36
- 41: Rahmenprofil
- 74: Befestigungselemente (Containerschrauben)
- 76: Stege
- 77a-77d: Kammern
- 78,79: verdickte Wandbereiche
- 80: Kopf der Befestigungselemente 74
- 81: Mutterstück der Befestigungselemente 74

- A: Außenseite des Lattenabschnitts 7
- D: Dicke der Kopfstücke 9,10
- DL: Dicke des Lattenabschnitts 8
- L: Längsrichtung der Einstecklatten 7
- Lb: Lochlaibung

## Patentansprüche

1. Einstecklatte für Transportfahrzeuge, mit einem Lattenabschnitt (8), an dessen Enden jeweils ein in eine Aufnahme (11) einer an dem Transportfahrzeug montierten Runge (3a,3b) einsteckbares Kopfstück (9,10) vorhanden ist,
- wobei mindestens eines der Kopfstücke (9,10) als separates und in Längsrichtung (L) des Lattenabschnitts (8) an diesem ausrichtbares Bauelement ausgebildet ist und
- wobei das Kopfstück (9,10) am Lattenabschnitt (8) form- und/oder kraftschlüssig gehalten ist,
**dadurch gekenntzeichnet,**
- **dass** mindestens der der Aufnahme (11) der jeweiligen Runge (3a,3b) zugeordnete, frei vom Lattenabschnitt (8) abstehende und an die Form und Abmessungen der Aufnahme (11) angepasste Endabschnitt (25,26) des Kopfstücks (9,10) eine Dicke (D) aufweist, die ≤ 85 %, insbesondere ≤ 80 %, der Dicke (DL) des Lattenabschnitts (8) beträgt.

2. Einstecklatte nach Anspruch 1, **dadurch**
**gekennzeichnet, dass** beide Kopfstücke (9,10) als separates, in Längsrichtung (L) des Lattenabschnitts (8) an diesem ausrichtbares und an dem Lattenabschnitt (8) form- und/oder kraftschlüssig befestigbares Bauelement ausgebildet sind.

3. Einstecklatte nach einem der voranstehenden Ansprüche, **dadurch gekennzeichnet, dass** der Lattenabschnitt (8) als Hohlprofil ausgebildet ist.

4. Einstecklatte nach Anspruch 3, **dadurch gekennzeichnet, dass** der
Lattenabschnitt (8) zwei parallel in Längsrichtung (L) des Lattenabschnitts (8) verlaufende und beabstandet zueinander ausgerichtete Kastenabschnitte (12,13) aufweist, die über einen Wandabschnitt (14) miteinander verbunden sind.

5. Einstecklatte nach Anspruch 4, **dadurch gekennzeichnet, dass** die Kastenabschnitte (12,13) mit ihren einander zugeordneten Seitenflächen (16) jeweils eine Führung für das Kopfstück (9,10) bilden.

6. Einstecklatte nach Anspruch 4 oder 5, **dadurch gekennzeichnet, dass** der Wandabschnitt (14) eine seitliche Führung für das Kopfstück (9, 10) bildet.

7. Einstecklatte nach einem der Ansprüche 4, 5 und 6,
**dadurch gekennzeichnet, dass** der Wandabschnitt (14) bündig zu jeweils einer der Seitenflächen der Kastenabschnitte (12,13) angeordnet ist.

8. Einstecklatte nach Anspruch 7, **dadurch**
**gekennzeichnet, dass** an der zum Wandabschnitt (14) gegenüberliegenden Kante der Kastenabschnitte jeweils ein Absatz (15) angeformt ist, an dem das Kopfstück (9,10) seitlich geführt ist.

9. Einstecklatte nach einem der voranstehenden Ansprüche, **dadurch gekennzeichnet, dass** ein Befestigungsmittel zum kraftschlüssigen Befestigen des Kopfstücks (9,10) an dem Lattenabschnitt (8) vorgesehen ist.

10. Einstecklatte nach Anspruch 9, **dadurch gekennzeichnet, dass** das Befestigungsmittel eine Schraubverbindung (28,30) oder eine Nietverbindung ist.

11. Einstecklatte nach einem der voranstehenden Ansprüche, **dadurch**
**gekennzeichnet, dass** das Kopfstück (9,10) als Hohlprofil ausgebildet ist.

12. Einstecklatte nach Anspruch 11 und einem der Ansprüche 9 oder 10, **dadurch**
**gekennzeichnet, dass** das Kopfstück (9,10) im Wirkbereich des Befestigungsmittels verstärkt ist.

13. Einstecklatte nach Anspruch 12, **dadurch gekennzeichnet, dass** die Verstärkung in jedem Bereich des Kopfstücks (9, 10) vorgesehen ist, an der das Befestigungsmittel ansetzbar ist.

14. Einstecklatte nach einem der Ansprüche 12 oder 13,
**dadurch gekennzeichnet, dass** das Kopfstück (9,10) im Wirkbereich des Befestigungsmittels mindestens einen Versteifungssteg (18,19) aufweist.

15. Einstecklatte nach Anspruch 14, **dadurch**
**gekennzeichnet, dass** mehr als ein Versteifungssteg (18,19) vorhanden ist und die Versteifungsstege (18,19) beabstandet zueinander angeordnet sind.

16. Einstecklatte nach einem der voranstehenden Ansprüche, **dadurch**
**gekennzeichnet, dass** in den Wandabschnitt (14) mindestens eine Öffnung zum Einführen eines Halteelements eingeformt ist.

17. Einstecklatte nach Anspruch 16, **dadurch**
**gekennzeichnet, dass** mehrere Öffnungen in den Wandabschnitt (14) eingeformt sind und die Öffnungen (31) in regelmäßigen Abständen angeordnet sind.

18. Einstecklatte nach einem der voranstehenden Ansprüche, **dadurch**
**gekennzeichnet, dass** der Übergang (35,36) von der der jeweiligen Last zugeordneten Seite (37) des Wandabschnitts (14) zur Unterseite (39) und / oder zur Oberseite (38) der Einstecklatte (7) abgerundet und / oder abgeflacht ausgebildet ist.

19. Aufbau für die Ladefläche eines Transportfahrzeugs, insbesondere eines Lastkraftwagens oder eines Aufliegers bzw. Anhängers für einen Lastkraftwagen, mit beabstandet zueinander angeordneten, auf der Ladefläche (2) aufgestellten Rungen (3a,3b) und zwischen den Rungen (3a, 3b) angeordneten Einstecklatten (7), die mit endseitigen Kopfstücken (9,10) jeweils in eine an den Rungen (3a,3b) ausgebildete Aufnahme (11) eingesteckt sind,
**dadurch gekennzeichnet, dass** die Einstecklatten (7) gemäß einem der Ansprüche 1 bis 18 ausgebildet sind.

20. Transportfahrzeug, insbesondere Lastkraftwagen oder Auflieger bzw. Anhänger für einen Lastkraftwagen, mit einer Ladefläche (2) und einem gemäß Anspruch 19 ausgebildeten Aufbau (1) für diese Ladefläche (2).

## Claims

1. Insertable slat for transport vehicles, with a slat section (8), at the ends of which in each case a head piece (9, 10) insertable in a retainer (11) of a stake (3a, 3b) mounted on the transport vehicle is present,
- wherein at least one of the head pieces (9, 10) is designed as a separate component part which is alignable to the slat section (8) in a longitudinal direction (L) thereof and
- wherein the head piece (9, 10) is positively and/or non-positively connected to the slat section (8),
**characterized in that**
- at least the end section (25, 26) of the head piece (9, 10), which end section being assigned to the retainer (11) of the respective stake (3a, 3b), standing free from the slat section (8) and being adapted to the shape and dimensions of the retainer (11), has a thickness (D) amounting to ≤ 85%, more particularly ≤ 80%, of the thickness (DL) of the slat section (8).

2. Insertable slat according to Claim 1, **characterized in that** both head pieces (9, 10) are designed as a separate component part which is alignable to the slat section (8) in a longitudinal direction (L) thereof and can be positively and/or non-positively fixed to the slat section (8).

3. Insertable slat according to any one of the preceding claims, **characterized in that** the slat section (8) is designed as a hollow profile.

4. Insertable slat according to Claim 3, **characterized in that** the slat section (8) has two box sections (12, 13) running parallel in a longitudinal direction (L) of the slat section (8) and aligned at a distance from each other, which box sections are connected to each other by a wall section (14).

5. Insertable slat according to Claim 4, **characterized in that** the box sections (12, 13) with their sides (16) assigned to each other in each case form a guide for the head piece (9, 10).

6. Insertable slat according to Claim 4 or 5, **characterized in that** the wall section (14) forms a lateral guide for the head piece (9, 10).

7. Insertable slat according to any one of claims 4, 5 and 6, **characterized in that** the wall section (14) is arranged in each case flush with one of the sides of the box sections (12, 13).

8. Insertable slat according to Claim 7, **characterized in that** on the edge, facing the wall section (14), of the box sections, in each case a shoulder (15) is moulded on, on which the head piece (9, 10) is laterally guided.

9. Insertable slat according to any one of the preceding claims, **characterized in that** a fixing means for non-positive fixing of the head piece (9, 10) to the slat section (8) is provided.

10. Insertable slat according to Claim 9, **characterized in that** the fixing means is a screw connection (28, 30) or a riveted joint.

11. Insertable slat according to any one of the preceding claims, **characterized in that** the head piece (9, 10) is designed as a hollow profile.

12. Insertable slat according to Claim 11 and either of claims 9 or 10, **characterized in that** the head piece (9, 10) is reinforced in the effective region of the fixing means.

13. Insertable slat according to Claim 12, **characterized in that** the reinforcement is provided in each region of the head piece (9, 10) on which the fixing means can be placed.

14. Insertable slat according to any one of claims 12 or 13, **characterized in that** the head piece (9, 10) has at least one stiffening bar (18, 19) in the effective region of the fixing means.

15. Insertable slat according to Claim 14, **characterized in that** more than one stiffening bar (18, 19) is present and the stiffening bars (18, 19) are arranged at a distance from one another.

16. Insertable slat according to any one of the preceding claims, **characterized in that** at least one opening for introducing a retaining element is formed in the wall section (14).

17. Insertable slat according to Claim 16, **characterized in that** a plurality of openings are formed in the wall section (14) and the openings (31) are arranged at regular intervals.

18. Insertable slat according to any one of the preceding claims, **characterized in that** the transition (35, 36) of the side (37), assigned to the respective load, of the wall section (14) to the lower side (39) and/or the upper side (38) of the insertable slat (7) is designed so as to be rounded off and/or flattened.

19. Superstructure for the loading surface of a transport vehicle, in particular a truck, or a semi-trailer or a trailer for a truck, with stakes (3a, 3b) arranged at a distance from each other, mounted on the loading surface (2) and insertable slats (7) arranged between the stakes (3a, 3b), which insertable slats with end-side head pieces (9, 10) being in each case inserted into a retainer (11) fitted to the stakes (3a, 3b), **characterized in that** the insertable slats (7) are designed in accordance with any one of claims 1 to 18.

20. Transport vehicle, in particular truck, or semi-trailer or trailer for a truck, with a loading surface (2) and a superstructure (1) designed in accordance with Claim 19, for this loading surface (2).

## Revendications

1. Poutre de chargement amovible pour des véhicules automobiles de transport, avec une section de poutre de chargement amovible (8), à chacune des extrémités de laquelle est prévu un élément de tête (9. 10), qui peut être introduit dans un logement (11) d'un montant de plateforme (3a, 3b) d'un véhicule automobile de transport,
- au moins l'un des éléments de tête (9, 10) étant conçu sous la forme d'un élément séparé, qui, dans la direction longitudinale (L) de la section de poutre de chargement amovible (8), peut être ajusté sur celle-ci, et
- l'élément de tête (9, 10) étant maintenu sur la section de poutre de chargement amovible (8) par emboîtement et / ou de force,
**caractérisée en ce que**
- la section terminale (25, 26) de l'élément de tête (9, 10), associée au logement (11) du montant de plateforme (3a, 3b) respectif, en faisant saillie librement au-delà de la section de poutre de chargement amovible (8) et adaptée à la forme et aux dimensions du logement (11), présente une épaisseur (D), qui correspond à ≤ 85 %, en particulier de ≤ 80 %, de l'épaisseur (DL) de la section de poutre de chargement amovible (8).

2. Poutre de chargement amovible selon la revendication 1, **caractérisée en ce que** les deux éléments de tête (9, 10) sont conçus sous la forme d'un élément séparé, qui, dans la direction longitudinale (L) de la section de poutre de chargement amovible (8), peut être ajusté sur celle-ci, et fixé à ladite section de poutre de chargement amovible (8) par emboîtement et / ou de force.

3. Poutre de chargement amovible selon l'une des revendications précédentes, **caractérisée en ce que** la section de poutre de chargement amovible (8) est réalisée sous la forme d'un profilé creux.

4. Poutre de chargement amovible selon la revendication 3, **caractérisée en ce que** la section de poutre de chargement amovible (8) présente deux sections formant encaissement (12, 13), qui, s'étendant parallèlement à la direction longitudinale (L) de la section de poutre de chargement amovible (8) et étant disposées à distance l'une de l'autre, sont reliées ensemble par l'intermédiaire d'une section formant paroi (14).

5. Poutre de chargement amovible selon la revendication 4, **caractérisée en ce que** les sections formant encaissement (12, 13) forment chacune, avec leurs surfaces latérales (16), associées les unes aux autres, un guidage pour l'élément de tête (9, 10).

6. Poutre de chargement amovible selon revendication 4 ou 5, **caractérisée en ce que** la section formant paroi (14) forme un guidage latéral pour l'élément de tête (9, 10).

7. Poutre de chargement amovible selon l'une des revendications 4, 5 et 6, **caractérisée en ce que** la section formant paroi (14) est disposée à surface plane par rapport à chacune des surfaces latérales des sections formant encaissement (12, 13).

8. Poutre de chargement amovible selon la revendication 7, **caractérisée en ce que,** sur le bord des sections formant encaissement opposé à la section formant paroi (14) est respectivement formé un épaulement (15), le long duquel l'élément de tête (9, 10) est guidé latéralement.

9. Poutre de chargement amovible selon l'une des revendications précédentes, **caractérisée en ce qu'**un moyen de fixation est prévu pour la fixation forcée de l'élément de tête (9, 10) à la section de poutre de chargement amovible (8).

10. Poutre de chargement amovible selon la revendication 9, **caractérisée en ce que** le moyen de fixation est un assemblage par vis (28, 30) ou un assemblage par rivets.

11. Poutre de chargement amovible selon l'une des revendications précédentes, **caractérisée en ce que** l'élément de tête (9, 10) est réalisé sous la forme d'un profilé creux.

12. Poutre de chargement amovible selon la revendication 11 et l'une des revendications 9 ou 10, **caractérisée en ce que** l'élément de tête (9, 10) est renforcé dans la zone active du moyen de fixation.

13. Poutre de chargement amovible selon la revendication 12, **caractérisée en ce que** le renforcement est prévu dans chaque région de l'élément de tête (9, 10), dans laquelle le moyen de fixation peut être mis en place.

14. Poutre de chargement amovible selon l'une des revendications 12 ou 13, **caractérisée en ce que** l'élément de tête (9, 10) présente au moins une patte de renforcement (18, 19) dans la zone active du moyen de fixation.

15. Poutre de chargement amovible selon la revendication 14, **caractérisée en ce que** plus d'une patte de renforcement (18, 19) sont prévues et que les pattes de renforcement (18, 19) sont disposées à distance les unes des autres.

16. Poutre de chargement amovible selon l'une des revendications précédentes, **caractérisée en ce que**, dans la section formant paroi (14), est formée au moins une ouverture pour l'introduction d'un élément de maintien.

17. Poutre de chargement amovible selon la revendication 16, **caractérisée en ce que** plusieurs ouvertures sont formées dans la section formant paroi (14) et que les ouvertures (31) sont disposées à des intervalles réguliers.

18. Poutre de chargement amovible selon l'une des revendications précédentes, **caractérisée en ce que** la zone de transition (35, 36) entre le côté (37) de la section formant paroi (14) associé à la charge respective et la face inférieure (39) et / ou la face supérieure (38) de la poutre de chargement amovible (7) présente une forme arrondie et / ou aplatie.

19. Structure pour la plateforme de chargement d'un véhicule de transport, en particulier pour un camion ou une semi-remorque, respectivement une remorque pour un véhicule automobile destiné au transport de charges, avec des montants de plateforme (3a, 3b), qui sont installés sur la plateforme de chargement (2), et des poutres de chargement amovibles (7), qui, disposées entre les montants de plateforme (3a, 3b), sont introduites chacune, avec des éléments de tête (9, 10) terminaux, dans un logement (11), qui est formé sur les montants de plateforme (3a, 3b), **caractérisée en ce que** les poutres de chargement amovibles (7) sont réalisées selon l'une des revendications 1 à 18.

20. Véhicule de transport, en particulier camion ou semi-remorque, respectivement remorque pour un véhicule automobile destiné au transport de charges, avec une plateforme de chargement (2) et une structure (1), qui est conçue selon la revendication 19 pour cette plateforme de chargement (2).
